# EUROPEAN PATENT SPECIFICATION

(11) **EP 3 229 403 B1**
(45) Date of publication and mention of the grant of the patent: **02.01.2019**
(21) Application number: 16872219.7
(22) Date of filing: 30.09.2016
(51) Int. Cl.: H04L 12/24, H04L 29/08, G06F 17/30

(54) **SAMBA CONFIGURATION MANAGEMENT METHOD FOR NETWORK DEVICE AND SYSTEM**
SAMBA KONFIGURATIONSVERWALTUNGSVERFAHREN FÜR EINE NETZWERKVORRICHTUNG UND SYSTEM
PROCÉDÉ DE GESTION DE CONFIGURATION SAMBA POUR UN DISPOSITIF ET UN SYSTÈME DE RÉSEAU

(30) Priority: 09.12.2015 CN 201510908147
(43) Date of publication of application: 11.10.2017
(73) Proprietor: Phicomm (Shanghai) Co., Ltd., Shanghai 201616 (CN)
(72) Inventor: LV, Jiajian, Shanghai 201616 (CN)
(74) Representative: Hanna Moore + Curley
(86) International application number: PCT/CN2016/101400
(87) International publication number: WO 2017/097025

(56) References cited:
- CN-A- 102 122 248
- CN-A- 104 601 724
- CN-A- 105 117 496
- CN-A- 105 391 587
- US-A1- 2002 198 865
- US-A1- 2015 347 153
- US-B1- 7 721 048
- DANIEL MACCORMAC ET AL: "Towards local resource redirection across thin client protocols", DIGITAL INFORMATION MANAGEMENT, 2007. ICDIM '07. 2ND INTERNATIONAL CONFERENCE ON, IEEE, PISCATAWAY, NJ, USA, 31 October 2007 (2007-10-31), pages 165-172, XP031211165, ISBN: 978-1-4244-1475-8
- "smb.conf - The configuration file for the Samba suite", INTERNET CITATION, 23 October 1998 (1998-10-23), XP002241870, Retrieved from the Internet: URL:http://web.archive.org/web/20001001062 644/http://de.samba.org/samba/docs/man/smb .conf.5.html [retrieved on 2003-05-20]
- GEEL MATTHIAS ET AL: "Memsy: Keeping Track of Personal Digital Resources Across Devices and Services", 28 November 2015 (2015-11-28), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 71 - 83, XP047413226, ISSN: 0302-9743 ISBN: 978-3-642-35175-4 [retrieved on 2015-11-28] * chapter 3, page 75 *
- Western Digital: "My Net (TM) N900 Central HD Dual-Band Storage Router User Manual", , 30 November 2012 (2012-11-30), pages 1-97, XP055278152, Retrieved from the Internet: URL:http://www.wdc.com/wdproducts/library/ UM/ENG/4779-705074.pdf [retrieved on 2016-06-06]

## Description

### TECHNICAL FIELD

The present invention relates to computer technologies, and in particular, relates to a samba configuration management method and system for a network device.

### BACKGROUND

A router typically provides a Samba service, which may share files stored in the router. A user may set file sharing by modifying the configuration file of Samba. The configuration information may include users who are allowed to access, shared directories, read-write permissions and the like. Typically, a share directory is set, that is, a share directory is added in the configuration file of Samba. If a share directory is to be deleted, the corresponding piece of information only needs to be deleted from the configuration file of Samba. In practice, since most of the routers are external storage devices (for example, a U disk, a TF card or the like) which may be frequently inserted or removed. As a result, the share directory path of the Samba configuration file is inconsistent with the actual path thereof, and thus the user fails to access the configuration file. For example, a U disk 1 with a disk symbol F is externally connected to a router initially, and if the F disk is shared, the share directory of the configuration file is the F disk; if subsequently the U disk 1 is removed and another U disk 2 is inserted, the disk symbol of the U disk 2 is changed to F, and in this case even if the U disk 1 is re-inserted, the disk symbol of the U disk 1 is changed to G. However, the share directory of the configuration file is still under the original F disk. As a result, many invalid configurations are present in the Samba configuration file.

Accordingly, how to find a technical solution which may reduce invalid configurations of router Samba configurations is a problem to be urgently solved by a person skilled in the art.

DANIEL MACCORMAC ET AL: "Towards local resource redirection across thin client protocols" discloses that the design, implementation and testing of xmount, a package to support the use of client side hot-pluggable external storage devices across thin client protocols in a Linux envionment. Many third level institutions utilise thin client and remove access protocols, and as the use of portable external storage devices continues to increase, there is a strong case for the development of such a tool. Several existing thin client implementations lack the ability to manipulate client side file systems when working on the server side, and consequently restrict users productivity. By modifying the existing thin client computing model and creating a supplemental package for existing thin client protocols, these barriers can be eliminated, and support redirection of local peripheral devices from the client to the server. While existing support for local peripheral redirection is often platform or protocol dependent, the approach is independent of either. Moreover, the approach improves on existing implementations in certain aspects of performance.

US 2015/347153 A1 disclosese a system management controller includes a processing module and a removable external storage device interface. The removable external storage device interface is connectable to a removable external storage device. The removable external storage device pre-stores a controller configuration file. In response to connection of the removable external storage device interface to the removable external storage device, the processing module accesses the controller configuration file from the removable external storage device and configures the system management controller according to data in the controller configuration file.

### SUMMARY

In view of the above defect in the prior art, the present invention is intended to provide a Samba configuration management method and system for a network device, to solve the problem in the prior art that invalid configurations are present in the Samba configuration file due to insertion or removal of an external storage device.

To achieve the above objectives and other relevant objectives, the present invention provides a Samba configuration management method for a network device. The method includes: setting a share directory in an external storage device of the network device, adding information of the share directory into a configuration file of a Samba server, and storing the information of the share directory into a share backup file of the external storage device, wherein the information of the shared directory includes a share path; when it is detected that the external storage device is removed from the network device, detecting and deleting the information of the share directory related to the external storage device from the configuration file of the Samba server; and when it is detected that the external storage device is inserted into the network device, detecting and reading piece by piece the information of the share directory in the related share backup file of the external storage device, and performing the following operations: reading a share path of the information of the share directory, modifying a disk symbol of the share path into a current disk symbol of the external storage device, judging whether a modified share path is existent, if the modified share path is existent, adding the information of the share directory into the configuration file of the Samba server, and if the modified share path is not existent, deleting the information of the share directory from the share backup file; when modifying the information of the share directory in the configuration file of the Samba server, and modifying the information of the share directory in the share backup file of the external storage device.

Optionally, the share backup file is stored under a root directory of the external storage device.

Optionally, the method further includes: when deleting a share directory of the external storage device, deleting the information of the share directory from the configuration file of the Samba server, and deleting the information of the share directory from the share backup file of the external storage device.

Optionally, the network device includes a router.

The present invention further provides a Samba configuration management system for a network device. The system includes: a shared information management module, configured to set a share directory in an external storage device of the network device, adding information of the share directory into a configuration file of a Samba server, and storing the information of the share directory into a shared backup file of the external storage device, wherein the information of the shared directory includes a share path; a device removal management module, configured to, when it is detected that the external storage device is removed from the network device, detect and delete the information of the share directory related to the external storage device from the configuration file of the Samba server; a device insertion management module, configured to, when it is detected that the external storage device is inserted into the network device, detect and read piece by piece the information of the share directory in the related share backup file of the external storage device, and perform the following operations: reading a share path of the information of the share directory, modifying a disk symbol of the share path into a current disk symbol of the external storage device, judging whether a modified share path is existent, if the modified share path is existent, adding the information of the share directory into the configuration file of the Samba server, and if the modified share path is not existent, deleting the information of the share directory from the share backup file; the shared information management module is further configured to, when modifying a share directory of the external storage device, modify the information of the share directory in the configuration file of the Samba server, and modify the information of the share directory in the share backup file of the external storage device.

Optionally, the share backup file is stored under a root directory of the external storage device.

Optionally, a file attribute of the share backup file is a hidden file.

Optionally, the shared information management module is further configured to, when deleting a share directory of the external storage device, delete the information of the share directory from the configuration file of the Samba server, and delete the information of the share directory from the share backup file of the external storage device.

Optionally, the network device includes a router.

As described above, the Samba configuration management method and system for a network device according to the present invention achieve the following beneficial effect: Configuration information is backed up in a external storage device, and the configuration information is imported to a Samba configuration file after the external storage device is reinserted into a router, such that the problem of share failure due to changes of the path of an external device is solved.

### BRIEF DESCRIPTION OF THE DRAWINGS

FIG. 1 is a schematic flowchart of a Samba configuration management method for a network device according to an embodiment of the present invention; and
FIG. 2 is a schematic diagram illustrating modules of a Samba configuration management system for a network device according to an embodiment of the present invention.

Reference numerals and denotations thereof:
- 1: Samba configuration management system for a network device
- 11: Shared information management module
- 12: Device removal management module
- 13: Device insertion management module
- S1-S3: Steps

### DETAILED DESCRIPTION

The embodiments of the present invention are described hereinafter with reference to specific examples. A person skilled in the art would readily understand and know the other advantages and technical effects of the present invention based on the content disclosed in the specification of the present invention.

It should be noted that the drawings in the embodiments are merely intended to illustratively explain the basic concept of the present invention, and the drawings only illustrate components relevant to the present invention and are not drawn according to the quantity of components, the shapes and dimensions thereof in practice. The shape, quantity and scale of the components in practical implementation may be randomly altered, and the deployment of the components may be even more complicated.

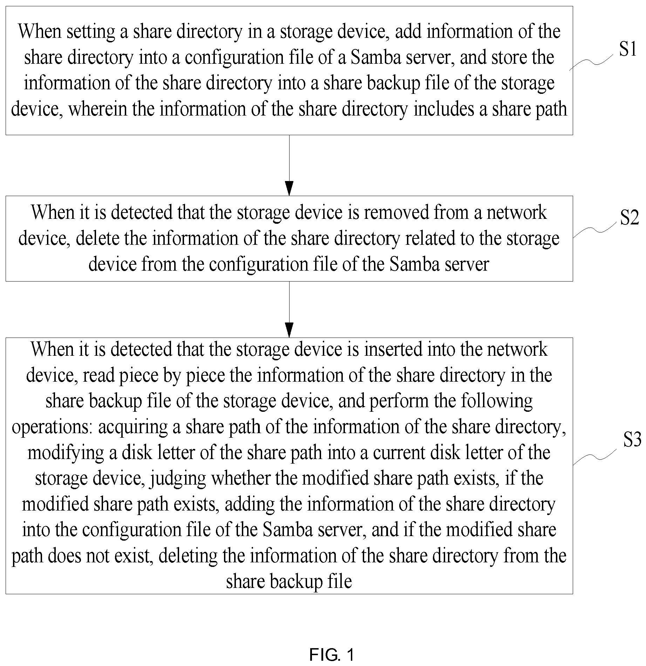

One embodiment of present invention further provides a Samba configuration management method for a network device. Samba is a toolkit, and implements Session Message Block (SIM) protocol in Unix, which may be also referred to as the NETBIOS/LanManager protocol. Server Messages Block (SMB) is a communication protocol for sharing files and printers over a local area network, and provides services for sharing such resources as files and printers among different computers within the local area network. File sharing may be set by modifying the configuration file of Samba. The configuration information may include users who are allowed to access, shared directories, read-write permissions and the like. Typically, a share directory is set, that is, a share directory is added in the configuration file (smb.conf) of Samba. If a share directory is to be deleted, the corresponding piece of information only needs to be deleted from the configuration file of Samba. In the technical solution according to the present invention, the configuration information is imported to a Samba configuration file after the external storage device is reinserted into a router, such that the problem of share failure due to changes of the path of an external device is solved. The network device includes a router. In one embodiment, as illustrated in FIG. 1, the Samba configuration management method includes the following steps:
Step S1: A share directory is set in an external storage device, information of the share directory is added into a configuration file of a Samba server, and the information of the share directory is stored into a shared backup file of the external storage device, wherein the information of the shared directory includes a share path. The information of the share directory refers to relevant information of the share directory, and may include a share path, a share name, users who are allowed to access, read-write permissions and the like. In one embodiment, the share backup file may be stored under a root directory of the external storage device. A file attribute of the share backup file is a hidden file. The external storage device is an external storage device, including a U disk, a TF card or the like.
Step S2: When it is detected that the external storage device is removed from a network device, the information of the share directory related to the external storage device is deleted from the configuration file of the Samba server. The network device includes a router.
Step S3: When it is detected that the external storage device is inserted into the network device, the information of the share directory in the share backup file of the external storage device is read piece by piece, and the following operations are performed: reading a share path of the information of the share directory, modifying a disk symbol of the share path into a current disk symbol of the external storage device, judging whether the modified share path is existent, if the modified share path is existent, adding the information of the share directory into the configuration file of the Samba server, and if the modified share path is not existent, deleting the information of the share directory from the share backup file.

In one embodiment, the method further includes: when deleting a share directory of the external storage device, deleting the information of the share directory from the configuration file of the Samba server, and deleting the information of the share directory from the share backup file of the external storage device. In one embodiment, the method further includes: when modifying a share directory of the external storage device, modifying the information of the share directory in the configuration file of the Samba server, and modifying the information of the share directory in the share backup file of the external storage device. In practice application, steps S1, S2 and S3 according to the present invention may be randomly performed without any sequential restriction as described above.

In one embodiment, the network device is a router. A Samba configuration management method for this network device includes: 1. Setting a share directory: When the router shares a file of a network, the configuration file smb.conf of a Samba server may be modified, and relevant information to be shared (for example, a share path, a share name, users who are allowed to access, read-write permission and the like) is backed up under a root directory of the device, wherein a file attribute of the backup file is a hidden file. When the shared file is deleted or modified, the backup file under the root directory is also modified. 2. Inserting or removing an external storage device: A. When a external storage device is inserted, the CPU judges whether the external storage device has a backup of the Samba configuration file, and if the external storage device has a backup of the Samba configuration file, the backup information is read, whether the disk symbol in the share path is the current disk symbol is judged, if the disk symbol is incorrect, the incorrect disk symbol is modified to the current disk symbol, then whether the share path is existent is checked, if the share path is not existent, the shared information is deleted, and otherwise, the shared information is added to the configuration file smb.conf of the Samba server. B. When a external storage device is removed, the CPU detects that the external storage device is removed, and then clears all shared information relevant to the external storage device.

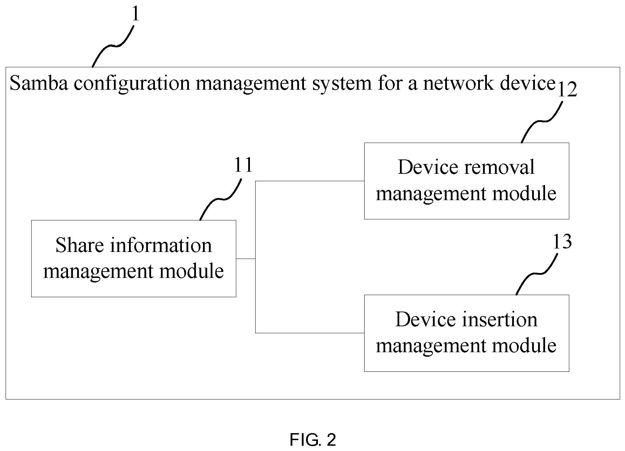

The embodiment of present invention further provides a Samba configuration management system for a network device. The above described Samba configuration management method may be applied in the Samba configuration management system. The network device includes a router. In one embodiment, as illustrated in FIG. 2, a Samba configuration management system 1 for a network device includes a shared information management module 11, a device removal management module 12 and a device insertion management module 13.

The shared information management module 11 is configured to set a share directory in a external storage device, add information of the share directory into a configuration file of a Samba server, and store the information of the share directory into a shared backup file of the external storage device, wherein the information of the shared directory includes a share path. The information of the share directory refers to relevant information of the share directory, and may include a share path, a share name, users who are allowed to access, read-write permissions and the like. In one embodiment, the share backup file may be stored under a root directory of the external storage device. A file attribute of the share backup file is a hidden file. In one embodiment, the shared information management module 11 is further configured to, when deleting a share directory of the external storage device, delete the information of the share directory from the configuration file of the Samba server, and delete the information of the share directory from the share backup file of the external storage device. In one embodiment, the shared information management module 11 is further configured to, when modifying a share directory of the external storage device, modify the information of the share directory in the configuration file of the Samba server, and modify the information of the share directory in the share backup file of the external storage device. The external storage device is an external storage device, including a U disk, a TF card or the like.

The device removal management module is connected to the shared information management module 11, and configured to, when it is detected that the external storage device is removed from a network device, delete the information of the share directory related to the external storage device from the configuration file of the Samba server. The network device includes a router.

The device insertion management module 13 is connected to the shared information management module 11, and configured to, when it is detected that the external storage device is inserted into the network device, read piece by piece the information of the share directory in the share backup file of the external storage device, and perform the following operations: reading a share path of the information of the share directory, modifying a disk symbol of the share path into a current disk symbol of the external storage device, judging whether the modified share path is existent, if the modified share path is existent, adding the information of the share directory into the configuration file of the Samba server, and if the modified share path is not existent, deleting the information of the share directory from the share backup file.

As described above, in the Samba configuration management method and system for a network device according to the present invention, configuration information is backed up in a external storage device, and the configuration information is imported to a Samba configuration file after the external storage device is reinserted into a router, such that the problem of share failure due to changes of the path of an external device is solved.

The concept of the present invention is protected in the scope defined by the appended claims.

## Claims

1. A Samba configuration management method for a network device, the method comprising:
setting a share directory in an external storage device of the network device, adding information of the share directory into a configuration file of a Samba server, and storing the information of the share directory into a share backup file of the external storage device, wherein the information of the shared directory comprises a share path (S1);
when it is detected that the external storage device is removed from the network device, detecting and deleting the information of the share directory related to the external storage device from the configuration file of the Samba server (S2); and
when it is detected that the external storage device is inserted into the network device, detecting and reading piece by piece the information of the share directory in the related share backup file of the external storage device, and performing the following operations: reading a share path of the information of the share directory, modifying a disk symbol of the share path into a current disk symbol of the external storage device, judging whether a modified share path is existent, if the modified share path is existent, adding the information of the share directory into the configuration file of the Samba server, and if the modified share path is not existent, deleting the information of the share directory from the share backup file (S3);
when modifying a share path of the external storage device, modifying the information of the share path in the configuration file of the Samba server, and modifying the information of the share path in the share backup file of the external storage device.

2. The Samba configuration management method for a network device according to claim 1, further **characterized by**: when deleting a share directory of the external storage device, deleting the information of the share directory from the configuration file of the Samba server, and deleting the information of the share directory from the share backup file of the external storage device.

3. The Samba configuration management method for a network device according to claim 1, wherein the network device comprises a router.

4. A Samba configuration management system (1) for a network device, the system comprising:
a shared information management module (11), configured to set a share directory in an external storage device of the network device, add information of the share directory into a configuration file of a Samba server, and store the information of the share directory into a shared backup file of the external storage device, wherein the information of the shared directory comprises a share path;
a device removal management module (12), configured to, when it is detected that the external storage device is removed from a network device, detect and delete the information of the share directory related to the external storage device from the configuration file of the Samba server;
a device insertion management module (13), configured to, when it is detected that the external storage device is inserted into the network device, detect and read piece by piece the information of the share directory in the related share backup file of the external storage device, and perform the following operations: reading a share path of the information of the share directory, modifying a disk symbol of the share path into a current disk symbol of the external storage device, judging whether a modified share path is existent, if the modified share path is existent, adding the information of the share directory into the configuration file of the Samba server, and if the modified share path is not existent, deleting the information of the share directory from the share backup file;
wherein the shared information management module (11) is further configured to, when modifying a share path of the external storage device, modifying the information of the share path in the configuration file of the Samba server, and modifying the information of the share path in the share backup file of the external storage device.

5. The Samba configuration management system for a network device according to claim 4, wherein the shared information management module (11) is further configured to, when deleting a share directory of the external storage device, delete the information of the share directory from the configuration file of the Samba server, and delete the information of the share directory from the share backup file of the external storage device.

6. The Samba configuration management system for a network device according to claim 4, wherein the shared backup file is stored under a root directory of the external storage device.

7. The Samba configuration management system for a network device according to claim 4, wherein a file attribute of the share backup file is a hidden file.

8. The Samba configuration management system for a network device according to claim 4, wherein the network device comprises a router.

## Patentansprüche

1. Verfahren zur Verwaltung von Samba-Konfigurationen für ein Netzwerkgerät, umfassend:
Erstellen eines Freigabeverzeichnisses in einem externen Speichergerät des Netzwerkgerätes, Hinzufügen von Informationen über das Freigabeverzeichnis zu einer Konfigurationsdatei eines Samba-Servers und Speichern dieser Informationen über das Freigabeverzeichnis in einer freigegebenen Sicherungsdatei des externen Speichergerätes, wobei die Informationen über das Freigabeverzeichnis einen Freigabepfad enthalten (S1);
wenn festgestellt wird, dass das externe Speichergerät von dem Netzwerkgerät entfernt ist, Erkennen und Löschen der Informationen über das Freigabeverzeichnis bezüglich des externen Speichergerätes von der Konfigurationsdatei des Samba-Servers (S2); und
wenn festgestellt wird, dass das externe Speichergerät an das Netzwerkgerät angeschlossen ist, Erkennen und stückweises Auslesen der Informationen über das Freigabeverzeichnis in der freigegebenen Sicherungsdatei des externen Speichergerätes, sowie Durchführen folgender Schritte: Lesen eines Freigabepfades von den Informationen über das Freigabeverzeichnis, Ersetzen eines Diskettensymbols von dem Freigabepfad durch ein aktuelles Diskettensymbol von dem externen Speichergerät, Beurteilen, ob der geänderte Freigabepfad vorhanden ist, Hinzufügen der Informationen über das Freigabeverzeichnis zu der Konfigurationsdatei des Samba-Servers, wenn der geänderte Freigabepfad vorhanden ist, Löschen der Informationen über das Freigabeverzeichnis von der freigegebenen Sicherungsdatei, wenn der geänderte Freigabepfad nicht vorhanden ist (S3);
Ändern der Informationen über den Freigabepfad in der Konfigurationsdatei des Samba-Servers und Ändern der Informationen über den Freigabepfad in der freigegebenen Sicherungsdatei des externen Speichergerätes, wenn der Freigabepfad des externen Speichergerätes geändert wird.

2. Verfahren nach Anspruch 1, **dadurch gekennzeichnet, dass** die Informationen über das Freigabeverzeichnis aus der Konfigurationsdatei des Samba-Servers entfernt werden und dass die Informationen über das Freigabeverzeichnis aus der freigegebenen Sicherungsdatei des externen Speichergerätes entfernt werden, wenn das Freigabeverzeichnis für das externe Speichergerät gelöscht wird.

3. Verfahren nach Anspruch 1, wobei das Netzwerkgerät einen Router umfasst.

4. System (1) zur Verwaltung von Samba-Konfigurationen für ein Netzwerkgerät, umfassend:
ein Verwaltungsmodul (11) für freigegebene Informationen, welches vorgesehen ist, ein Freigabeverzeichnis in einem externen Speichergerät des Netzwerkgerätes zu erstellen, Infomationen über das Freigabeverzeichnis zu einer Konfigurationsdatei eines Samba-Servers hinzuzufügen und diese Informationen über das Freigabeverzeichnis in einer freigegebenen Sicherungsdatei des externen Speichergerätes zu speichern, wobei die Informationen über das Freigabeverzeichnis einen Freigabepfad enthalten;
ein Verwaltungsmodul (12) für entfernte Geräte, welches vorgesehen ist, , wenn festgestellt wird, dass das externe Speichergerät von dem Netzwerkgerät entfernt ist, die Informationen über das Freigabeverzeichnis bezüglich des externen Speichergerätes zu erkennen und diese von der Konfigurationsdatei des Samba-Servers zu löschen;
ein Verwaltungsmodul (13) für angeschlossene Geräte, welches vorgesehen ist, wenn festgestellt wird, dass das externe Speichergerät an das Netzwerkgerät angeschlossen ist, die Informationen über das Freigabeverzeichnis in der freigegebenen Sicherungsdatei des externen Speichergerätes zu erkennen und stückweise auszulesen sowie folgende Schritte durchzuführen: Lesen eines Freigabepfades von den Informationen über das Freigabeverzeichnis, Ersetzen eines Diskettensymbols von dem Freigabepfad durch ein aktuelles Diskettensymbol von dem externen Speichergerät, Beurteilen, ob der geänderte Freigabepfad vorhanden ist, Hinzufügen der Informationen über das Freigabeverzeichnis zu der Konfigurationsdatei des Samba-Servers, wenn der geänderte Freigabepfad vorhanden ist, Löschen der Informationen über das Freigabeverzeichnis von der freigegebenen Sicherungsdatei, wenn der geänderte Freigabepfad nicht vorhanden ist;
wobei das Verwaltungsmodul (11) für freigegebene Informationen ferner dazu vorgesehen ist, die Informationen über den Freigabepfad in der Konfigurationsdatei des Samba-Servers zu ändern und die Informationen über den Freigabepfad in der freigegebenen Sicherungsdatei des externen Speichergerätes zu ändern, wenn der Freigabepfad des externen Speichergerätes geändert wird.

5. System nach Anspruch 4, wobei das Verwaltungsmodul (11) für freigegebene Informationen ferner dazu vorgesehen ist, die Informtaion über das Freigabeverzeichnis von der Konfigurationsdatei des Samba-Servers zu löschen, und die Information über das Freigabeverzeichnis von der freigegebenen Sicherungsdatei des externen Speichergerätes zu löschen, wenn das Freigabeverzeichnis für das externe Speichergerät gelöscht wird.

6. System nach Anspruch 4, wobei die freigegebene Sicherungsdatei im Stammverzeichnis des externen Speichergerätes gespeichert ist.

7. System nach Anspruch 4, wobei das Datei-Attribut der freigegebenen Sicherungsdatei eine versteckte Datei ist.

8. System nach Anspruch 4, wobei das Netzwerkgerät einen Router umfasst.

## Revendications

1. Procédé de gestion de configuration Samba pour un dispositif de réseau, comprenant:
réglant un répertoire de partage dans un dispositif de stockage externe du dispositif de réseau, ajoutant d'informations du répertoire de partage dans un fichier de configuration d'un serveur Samba, et stockant des informations du répertoire de partage dans un fichier de sauvegarde partagé du dispositif de stockage externe, dans lequel les informations du répertoire de partage comprennent un chemin de partage (S1;
lorsqu'il est détecté que le dispositif de stockage externe est supprimé du dispositif de réseau, détectant et supprimant les informations du répertoire de partage associé au dispositif de stockage externe du fichier de configuration du serveur Samba (S2);
lorsqu'il est détecté que le dispositif de stockage externe est inséré dans le périphérique réseau, détectant et lisant les informations du répertoire de partage dans le fichier de sauvegarde connexe partagé du dispositif de stockage externe et effectuant les opérations suivantes: acquérant d'un chemin de partage des informations de le répertoire de partage, modifiant une lettre de disque du chemin de partage dans une lettre de disque actuelle du dispositif de stockage externe, déterminant si le chemin de partage modifié existe, si le chemin de partage modifié existe, ajoutant les informations du répertoire de partage dans le fichier de configuration du Serveur Samba, et si le chemin de partage modifié n'existe pas, supprimant les informations du répertoire de partage du fichier de sauvegarde partagé (S3); et
en modifiant d'un répertoire de partage du dispositif de stockage externe, modifiant des informations du répertoire de partage dans le fichier de configuration du serveur Samba et modifiant des informations du partage répertoire dans le fichier de sauvegarde partagé du dispositif de stockage externe.

2. Procédé de gestion de la configuration Samba pour un dispositif de réseau selon la revendication 1, comprenant en outre: lors de la suppression d'un répertoire de partage du dispositif de stockage externe, supprimant des informations du répertoire de partage du fichier de configuration du serveur Samba, et supprimant des informations du partage répertoire du fichier de sauvegarde partagé du dispositif de stockage externe.

3. Procédé de gestion de la configuration Samba pour un dispositif de réseau selon la revendication 1, dans lequel le dispositif de réseau comprend un routeur.

4. Système (1) de gestion de configuration Samba pour un dispositif de réseau, comprenant:
un module (11) de gestion d'informations de partage, configuré pour, régler un répertoire de partage dans un dispositif de stockage externe du dispositif de réseau, ajouter des informations du répertoire de partage dans un fichier de configuration d'un serveur Samba, et stocker ces informations du répertoire de partage dans un fichier de sauvegarde de partage du dispositif de stockage externe, dans lequel les informations du répertoire de partage comprennent un chemin de partage;
un module (12) de gestion de suppression de périphérique, configuré pour, lorsqu'il est détecté que le dispositif de stockage externe est retiré d'un dispositif de réseau, détecter et supprimer les informations du répertoire de partage associé au dispositif de stockage externe du fichier de configuration du serveur Samba;
un module (13) de gestion d'insertion de périphérique, configuré pour lorsqu'il est détecté que le dispositif de stockage externe est inséré dans le dispositif de réseau, détecter et lire les informations du répertoire de partage dans le fichier de sauvegarde connexe partagée du dispositif de stockage externe, et effectuer les opérations suivantes: lisant un chemin de partage des informations du répertoire de partage, modifiant une lettre de disque du chemin de partage dans une lettre de disque actuelle du dispositif de stockage externe, déterminant si le chemin de partage modifié existe, si le chemin de partage modifié existe, ajoutant les informations du chemin de partage partager le répertoire dans le fichier de configuration du serveur Samba et, si le chemin de partage modifié n'existe pas, et supprimant les informations du répertoire de partage du fichier de sauvegarde partagé;
dans lequel le module (11) de gestion d'informations de partage est en outré configuré pour, en modifiant d'un répertoire de partage du dispositif de stockage externe, modifier des informations du répertoire de partage dans le fichier de configuration du serveur Samba. et modifier des informations du partage répertoire dans le fichier de sauvegarde partagé du dispositif de stockage externe.

5. Système de gestion de configuration Samba pour un dispositif de réseau selon la revendication 4, dans lequel le module (11) de gestion d'informations de partage est en outre configuré pour, en supprimant d'un répertoire de partage du dispositif de stockage externe, supprimer les informations du répertoire de partage du fichier de configuration du serveur Samba, et supprimer les informations du répertoire de partage du fichier de sauvegarde partagé du dispositif de stockage externe.

6. Système de gestion de configuration Samba pour un dispositif de réseau selon la revendication 4, dans lequel le fichier de sauvegarde de partage est stocké dans un répertoire racine du dispositif de stockage externe.

7. Système de gestion de configuration Samba pour un dispositif de réseau selon la revendication 4, dans lequel le fichier de sauvegarde de partage est un fichier caché.

8. Système de gestion de configuration Samba pour un dispositif de réseau selon la revendication 4, dans lequel le dispositif de réseau comprend un routeur.
